# EUROPEAN PATENT APPLICATION

(11) **EP 3 653 944 A1**
(43) Date of publication of application: **20.05.2020**
(21) Application number: 18831682.2
(22) Date of filing: 03.07.2018
(51) Int. Cl.: F24F 11/49, F24F 11/70, F24F 11/89, F24F 13/20, F25B 49/02

(54) **INDOOR UNIT FOR AIR CONDITIONER COMPRISING REFRIGERANT DETECTION SENSOR**

(30) Priority: 10.07.2017 JP 2017135015
(71) Applicant: Daikin Industries, Ltd., Osaka-shi, Osaka 530-8323 (JP)
(72) Inventor: NOUCHI, Yoshiteru, Kita-ku, Osaka-shi Osaka 530-8323 (JP)
(74) Representative: Hoffmann Eitle
(86) International application number: PCT/JP2018/025234
(87) International publication number: WO 2019/013049

(57) **Abstract**

An indoor unit (10) includes a blow-out port (18) through which air is blown out into a space (90) to be air-conditioned, a refrigerant flow path member (20) through which flammable refrigerant gas flows, and a refrigerant detection sensor (30) configured to detect the refrigerant gas leaking out of the refrigerant flow path member (20). The refrigerant detection sensor (30) is disposed facing the space (90) to be air-conditioned. The refrigerant detection sensor (30) includes a casing (31). The casing (31) includes a gas intake port (32) for taking in the refrigerant gas. The refrigerant detection sensor (30) includes an outside-air-flow-area part (36) disposed outside an air flow area (70) through which the air blown out through the blow-out port (18) passes. The outside-air-flow-area part (36) includes the gas intake port (32).

## Description

### TECHNICAL FIELD

The present invention relates to an indoor unit of an air conditioning apparatus, the indoor unit including a refrigerant detection sensor.

### BACKGROUND ART

In order to stop the operation of an air conditioning apparatus when a refrigerant leaks out of the air conditioning apparatus, the air conditioning apparatus may be equipped with a refrigerant detection sensor. An air conditioning apparatus disclosed in Patent Literature 1 (JP H08-178397 A) includes an indoor unit which is installed on a ceiling of a room to be air-conditioned and a refrigerant detection sensor which is installed on a wall. The refrigerant detection sensor notifies the indoor unit of a detection result by wired communication.

In a case where the refrigerant detection sensor and the indoor unit are separated from each other in this manner, a installation burden is large when the air conditioning apparatus is installed in the room. Thus, the refrigerant detection sensor is desirably integrated with the indoor unit.

### SUMMARY OF THE INVENTION

### <Technical Problem>

A blow-out port for air is present on the indoor unit. Air itself which enters and leaves the indoor unit and a foreign matter carried by the air hit the refrigerant detection sensor depending on the installed place of the refrigerant detection sensor in the indoor unit. Thus, there is a possibility that the lifetime of the refrigerant detection sensor is shortened due to damage.

It is an object of the present invention to maintain the lifetime of a refrigerant detection sensor in an indoor unit of an air conditioning apparatus.

### <Solution to Problem>

An indoor unit according to a first aspect of the present invention includes a blow-out port through which air is blown out into a space to be air-conditioned, a refrigerant flow path member through which flammable refrigerant gas flows, and a refrigerant detection sensor configured to detect the refrigerant gas leaking out of the refrigerant flow path member. The refrigerant detection sensor is disposed facing the space to be air-conditioned. The refrigerant detection sensor includes a casing. The casing includes a gas intake port for taking in the refrigerant gas. The refrigerant detection sensor includes an outside-air-flow-area part disposed outside an air flow area through which the air blown out through the blow-out port passes. The outside-air-flow-area part includes the gas intake port.

In this configuration, the gas intake port is disposed outside the air flow area. Thus, air itself or a foreign matter which may damage the refrigerant detection sensor is restrained from entering the inside of the refrigerant detection sensor through the gas intake port, which facilitates maintaining the lifetime of the refrigerant detection sensor.

An indoor unit according to a second aspect of the present invention is the indoor unit according to the first aspect in which the refrigerant detection sensor further includes a sensor element configured to detect the refrigerant gas and a filter through which the refrigerant gas passes before arriving at the sensor element. The outside-air-flow-area part includes the filter.

In this configuration, the filter is disposed outside the air flow area. Thus, air itself or a foreign matter is restrained from damaging the filter.

An indoor unit according to a third aspect of the present invention is the indoor unit according to the second aspect in which the outside-air-flow-area part includes the sensor element.

In this configuration, the sensor element is disposed outside the air flow area. Thus, air itself or the like is restrained from damaging the sensor element.

An indoor unit according to a fourth aspect of the present invention is the indoor unit according to any one of the first to third aspects further including a flap disposed on the blow-out port and configured to swing to change a blow-out direction of the air. The air flow area is inside a central angle defining a swing range of the flap.

In this configuration, the outside-air-flow-area part of the refrigerant detection sensor is disposed outside the swing range of the flap. Thus, the action of the flap restrains air or the like from hitting the refrigerant detection sensor.

An indoor unit according to a fifth aspect of the present invention is the indoor unit according to any one of the first to fourth aspects in which the outside-air-flow-area part is disposed adjacent to the blow-out port at a position displaced from the blow-out port in a longitudinal direction of the blow-out port.

In this configuration, the outside-air-flow-area part of the refrigerant detection sensor is disposed adjacent to the blow-out port at the position displaced from the blow-out port in the longitudinal direction of the blow-out port. Thus, the refrigerant detection sensor is disposed off wind blown out through the blow-out port. Therefore, the wind is less likely to hit the refrigerant detection sensor.

An indoor unit according to a sixth aspect of the present invention is the indoor unit according to any one of the first to fifth aspects in which the outside-air-flow-area part is disposed between a plurality of the blow-out ports.

In this configuration, the outside-air-flow-area part of the refrigerant detection sensor is disposed between the plurality of blow-out ports. Thus, the refrigerant detection sensor is disposed off a route of wind blown out through each of the blow-out ports. Therefore, the wind is less likely to hit the refrigerant detection sensor.

An indoor unit according to a seventh aspect of the present invention is the indoor unit according to any one of the first to sixth aspects further including an inlet port through which the air is drawn in from the space to be air-conditioned. The air drawn in through the inlet port passes through the air flow area.

In this configuration, the air drawn in through the inlet port passes through the air flow area. Thus, the air drawn in through the inlet port is restrained from damaging the refrigerant detection sensor.

An indoor unit according to an eighth aspect of the present invention is the indoor unit according to the seventh aspect in which the gas intake port is disposed at a position lower than a lowest one of the inlet port and the blow-out port.

In this configuration, the gas intake port is disposed lower than the openings of the indoor unit through which the refrigerant gas may leak out. Thus, when the refrigerant gas has a specific gravity higher than air, the detection performance is improved.

An indoor unit according to an ninth aspect of the present invention is the indoor unit according to the seventh or eighth aspect in which the outside-air-flow-area part is disposed between the blow-out port and the inlet port.

In this configuration, the outside-air-flow-area part of the refrigerant detection sensor is disposed between the blow-out port and the inlet port. Thus, the refrigerant detection sensor is disposed off a route of wind blown out through the blow-out port and a route of wind drawn in through the inlet port. Therefore, the wind is less likely to hit the refrigerant detection sensor.

An indoor unit according to a tenth aspect of the present invention is the indoor unit according to any one of the seventh to ninth aspects in which the outside-air-flow-area part is disposed on an opposite side of the inlet port with respect to the blow-out port.

In this configuration, the outside-air-flow-area part of the refrigerant detection sensor is disposed on the opposite side of the inlet port with respect to the blow-out port. Thus, the refrigerant detection sensor is disposed off a route of wind blown out through the blow-out port and a route of wind drawn in through the inlet port. Therefore, the wind is less likely to hit the refrigerant detection sensor.

An indoor unit according to an eleventh aspect of the present invention is the indoor unit according to any one of the seventh to tenth aspects in which the outside-air-flow-area part is disposed on an opposite side of the blow-out port with respect to the inlet port.

In this configuration, the outside-air-flow-area part of the refrigerant detection sensor is disposed on the opposite side of the blow-out port with respect to the inlet port. Thus, the refrigerant detection sensor is disposed off a route of wind blown out through the blow-out port and a route of wind drawn in through the inlet port. Therefore, the wind is less likely to hit the refrigerant detection sensor.

An indoor unit according to a twelfth aspect of the present invention is the indoor unit according to any one of the seventh to eleventh aspects in which the outside-air-flow-area part is disposed between a plurality of the inlet ports.

In this configuration, the outside-air-flow-area part of the refrigerant detection sensor is disposed between the plurality of inlet ports. Thus, the refrigerant detection sensor is disposed off a route of wind drawn in through each of the inlet ports. Therefore, the wind is less likely to hit the refrigerant detection sensor.

An indoor unit according to a thirteenth aspect of the present invention is the indoor unit according to any one of the seventh to twelfth aspects further including a housing configured to house the refrigerant flow path member. The outside-air-flow-area part is disposed on an opening on the housing other than the blow-out port and the inlet port.

In this configuration, the outside-air-flow-area part of the refrigerant detection sensor is disposed on the opening on the housing other than the blow-out port and the inlet port. Thus, the refrigerant detection sensor can be disposed off the blow-out port or the inlet port. Therefore, the wind is less likely to hit the refrigerant detection sensor.

An indoor unit according to a fourteenth aspect of the present invention is the indoor unit according to any one of the seventh to twelfth aspects further including a decorative panel disposed facing the space to be air-conditioned. The outside-air-flow-area part is disposed on an opening on the decorative panel other than the blow-out port and the inlet port.

In this configuration, the outside-air-flow-area part of the refrigerant detection sensor is disposed on the opening on the decorative panel other than the blow-out port and the inlet port. Thus, the refrigerant detection sensor can be disposed off the blow-out port or the inlet port. Therefore, the wind is less likely to hit the refrigerant detection sensor.

### <Advantageous Effects of Invention>

The indoor units according to the first to seventh aspects and the ninth to fourteenth aspects of the present invention facilitate maintaining the lifetime of the refrigerant detection sensor.

The indoor unit according to the eighth aspect of the present invention improves the refrigerant detection performance when the refrigerant gas has a specific gravity higher than air.

### BRIEF DESCRIPTION OF THE DRAWINGS

FIG. 1 is a schematic view of a basic configuration of an indoor unit 10 according to the present invention.
FIG. 2 is a schematic view of an example of the structure of a refrigerant detection sensor 30 which is mounted on the indoor unit 10.
FIG. 3 is a side sectional view of an indoor unit 10A according to a first embodiment of the present invention.
FIG. 4 is a bottom view of the indoor unit 10A according to the first embodiment of the present invention.
FIG. 5 is a bottom view of an indoor unit 10B according to a second embodiment of the present invention.
FIG. 6 is a bottom view of an indoor unit 10C according to a third embodiment of the present invention.
FIG. 7 is a side sectional view of an indoor unit 10D according to a fourth embodiment of the present invention.
FIG. 8 is a side sectional view of an indoor unit 10E according to a fifth embodiment of the present invention.
FIG. 9 is a bottom view of the indoor unit 10E according to the fifth embodiment of the present invention.
FIG. 10 is a side sectional view of an indoor unit 10F according to a sixth embodiment of the present invention.
FIG. 11 is a schematic view of an indoor unit 10G according to a seventh embodiment of the present invention.

### DESCRIPTION OF EMBODIMENTS

### <Basic Configuration>

### (1) Entire Configuration

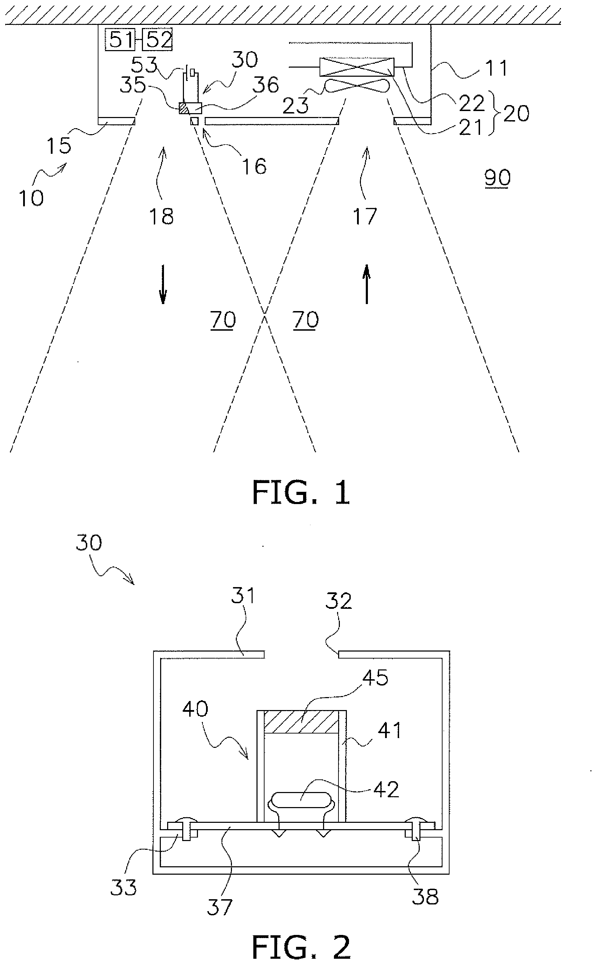

FIG. 1 schematically illustrates an indoor unit 10 of an air conditioner according to the present invention. The indoor unit 10 is installed on a ceiling, a wall, or another location of a room which is a space 90 to be air-conditioned. The indoor unit 10 includes a housing 11. A decorative panel 15, which gives a good appearance for a user present in the space 90 to be air-conditioned, may be attached to the housing 11. An inlet port 17 through which air is drawn in from the space 90 to be air-conditioned and a blow-out port 18 through which air is blown out into the space 90 to be air-conditioned are formed on the housing 11 or the decorative panel 15. Air blown out through the blow-out port 18 and air drawn in through the inlet port 17 pass through an area which is referred to as an air flow area 70. Relatively strong wind is generated in the air flow area 70. A refrigerant flow path member 20, a fan 23, and a refrigerant detection sensor 30 are disposed inside the housing 11.

### (2) Detailed Configuration

### (2-1) Refrigerant Flow Path Member 20

The refrigerant flow path member 20 of the indoor unit 10 constitutes a refrigerant circuit together with an outdoor unit (not illustrated). A flammable refrigerant may circulate through the refrigerant circuit. For example, the flammable refrigerant may be a mildly flammable refrigerant. The refrigerant flow path member 20 includes a heat exchanger 21 and a refrigerant pipe 22. The heat exchanger 21 exchanges heat between the refrigerant flowing through the refrigerant pipe 22 and air. When the refrigerant flows through the refrigerant flow path member 20, the refrigerant can be in various states such as a gas state, a gas-liquid two-phase state, and a liquid state.

### (2-2) Fan 23

The fan 23 draws in air through the inlet port 17, facilitates heat transfer between the air and the refrigerant in the heat exchanger 21, and blows out the air through the blow-out port 18. The fan 23 is controlled by a control circuit 51.

### (2-3) Refrigerant Detection Sensor 30

The refrigerant detection sensor 30 is used for detecting refrigerant gas leaking from the refrigerant flow path member 20 into the space 90 to be air-conditioned. In other words, it is not a sole object of the refrigerant detection sensor 30 to detect leaked refrigerant gas accumulated inside the housing 11. In order to detect the leakage of refrigerant gas into the space 90 to be air-conditioned, the housing 11 or the decorative panel 15 is preferably provided with an opening 16 facing the space 90 to be air-conditioned so that the refrigerant detection sensor 30 can be mounted. The opening 16 for leaked refrigerant detection by the refrigerant detection sensor 30 is preferably separately provided rather than using the inlet port 17 or the blow-out port 18 as the opening 16.

An output signal of the refrigerant detection sensor 30 is transmitted to a reception circuit 52 by wired communication or wireless communication and then processed by the control circuit 51 which is connected to the reception circuit 52. When wireless communication is performed, a battery 53 for power supply may be connected to the refrigerant detection sensor 30.

### (3) Details of Refrigerant Detection Sensor 30

As illustrated in FIG. 1, a part of the refrigerant detection sensor 30 disposed inside the air flow area 70 is referred to as an inside-air-flow-area part 35. On the other hand, a part of the refrigerant detection sensor 30 disposed outside the air flow area 70 is referred to as an outside-air-flow-area part 36. In the present invention, the refrigerant detection sensor 30 at least includes the outside-air-flow-area part 36. For example, the entire refrigerant detection sensor 30 may be the outside-air-flow-area part 36.

FIG. 2 is an example of the structure of the refrigerant detection sensor 30. The refrigerant detection sensor 30 includes a casing 31, a circuit board 37, and a sensor unit 40. The casing 31 houses the circuit board 37 and the sensor unit 40. The casing 31 is formed with a gas intake port 32 for taking in refrigerant gas and a circuit board support 33 for supporting the circuit board 37. The sensor unit 40 is disposed on the circuit board 37. At least a part of the casing 31 may be constituted of the housing 11 or the decorative panel 15. In this case, for example, the opening 16 and the gas intake port 32 may be the same port. On the other hand, in a case where the housing 11 or the decorative panel 15 is separated from the casing 31, the refrigerant detection sensor 30 is disposed in a manner such that the opening 16 for leaked refrigerant detection on the housing 11 or the decorative panel 15 communicates with the gas intake port 32 of the refrigerant detection sensor 30.

The sensor unit 40 includes a sensor cover 41, a sensor element 42, and a filter 45. The sensor element 42 is configured to detect refrigerant gas. For example, a resistance value of the sensor element 42 changes according to the concentration of refrigerant gas. The sensor element 42 is mounted on the circuit board 37. The sensor cover 41 guides refrigerant gas so that the refrigerant gas passes through the filter 45 before arriving at the sensor element 42. At least a part of the sensor cover 41 may be constituted of the housing 11 or the decorative panel 15. Alternatively, at least a part of the sensor cover 41 may be constituted of the casing 31.

The outside-air-flow-area part 36 of the refrigerant detection sensor 30 is set to include the gas intake port 32. The outside-air-flow-area part 36 may further include the filter 45 or the sensor element 42.

In a case where the filter 45 is disposed on substantially the same plane as the housing 11 or the decorative panel 15, the filter 45 itself serves as the gas intake port 32.

### (4) Characteristics

### (4-1)

The gas intake port 32 is disposed outside the air flow area 70. Thus, air itself or a foreign matter which may damage the refrigerant detection sensor 30 is restrained from entering the inside of the refrigerant detection sensor 30 through the gas intake port 32, which facilitates maintaining the lifetime of the refrigerant detection sensor 30.

### (4-2)

The filter 45 or the sensor element 42 may also be disposed outside the air flow area 70. In this case, air itself or a foreign matter is prevented from damaging the filter 45 or the sensor element 42.

### <First Embodiment>

### (1) Configuration

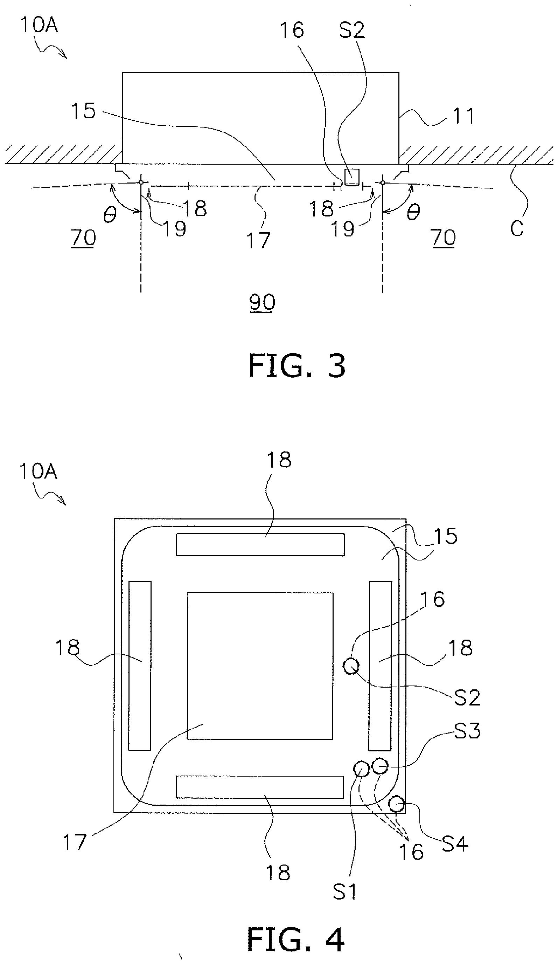

FIGS. 3 and 4 illustrate an indoor unit 10A according to a first embodiment of the present invention. The indoor unit 10A is a ceiling-embedded cassette type four-direction blow-out indoor unit. The indoor unit 10A is embedded in a ceiling C. A housing 11 is provided with a decorative panel 15 and a flap 19. The flap 19 is disposed at each blow-out port 18, and swings in the range of a central angle θ to change the blow-out direction of air. An air flow area 70 is inside the central angle θ which defines the swing range of the flap 19.

For example, a refrigerant detection sensor 30 is disposed at a place S1, a place S2, a place S3, or a place S4. The place S1, the place S2, the place S3, and the place S4 are all located outside the central angle θ. The place S1 is located between two adjacent blow-out ports 18. The place S2 is located between the blow-out port 18 and an inlet port 17. The place S3 is located adjacent to the blow-out port 18 at a position displaced from the blow-out port 18 in the longitudinal direction of the blow-out port 18. The place S4 is located at an opening 16 on the decorative panel 15 other than the blow-out port 18 and the inlet port 17 in a manner similar to the places S1 to S3.

### (2) Characteristics

### (2-1)

Regarding each of the places S1 to S4, an outside-air-flow-area part 36 of the refrigerant detection sensor 30 is disposed outside the swing range of the flap 19. Thus, the wind or the like is restrained from hitting the refrigerant detection sensor 30 due to the action of the flap 19.

### (2-2)

Regarding the place S1, the outside-air-flow-area part 36 of the refrigerant detection sensor 30 is disposed between the plurality of blow-out ports 18. Thus, the refrigerant detection sensor 30 is disposed off a route of wind blown out through each of the blow-out ports 18. Therefore, the wind is less likely to hit the refrigerant detection sensor 30.

### (2-3)

Regarding the place S2, the outside-air-flow-area part 36 of the refrigerant detection sensor 30 is disposed between the blow-out port 18 and the inlet port 17. Thus, the refrigerant detection sensor 30 is disposed off a route of wind blown out through the blow-out port 18 and a route of wind drawn in through the inlet port 17. Therefore, the wind is less likely to hit the refrigerant detection sensor 30.

### (2-4)

Regarding the place S3, the outside-air-flow-area part 36 of the refrigerant detection sensor 30 is disposed adjacent to the blow-out port 18 at the position displaced from the blow-out port 18 in the longitudinal direction of the blow-out port 18. Thus, the refrigerant detection sensor 30 is disposed off wind blown out through the blow-out port 18. Therefore, the wind is less likely to hit the refrigerant detection sensor 30.

### (2-5)

Regarding each of the places S1 to S4, the outside-air-flow-area part 36 of the refrigerant detection sensor 30 is disposed at the opening 16 on the decorative panel 15 other than the blow-out port 18 and the inlet port 17. Thus, the refrigerant detection sensor 30 can be disposed off the blow-out port 18 or the inlet port 17. Therefore, the wind is less likely to hit the refrigerant detection sensor 30.

### (2-6)

For example, regarding the place S2, a gas intake port 32 may be disposed lower than both the inlet port 17 and the blow-out port 18 through which the refrigerant gas may leak out. Thus, when the refrigerant gas has a specific gravity higher than air, the detection performance is improved.

### <Second Embodiment>

### (1) Configuration

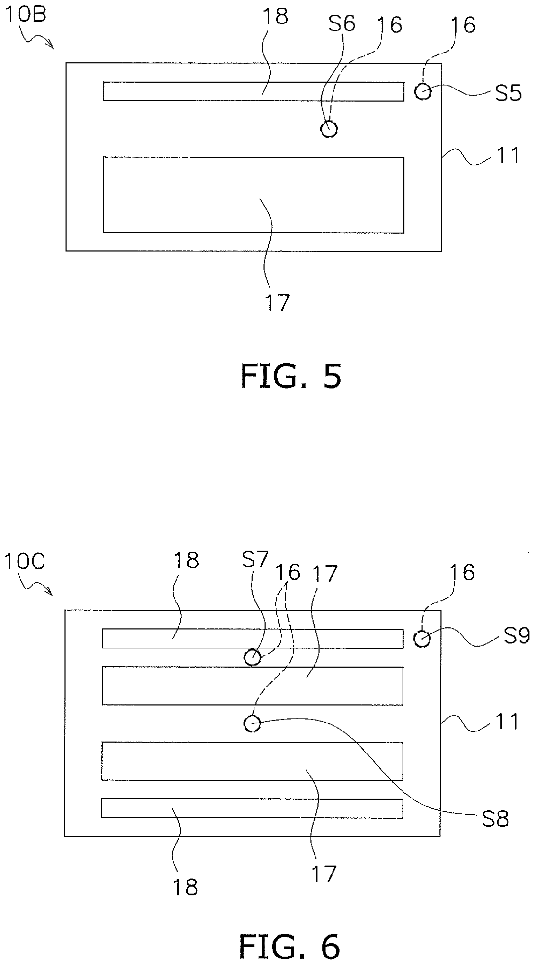

FIG. 5 illustrates an indoor unit 10B according to a second embodiment of the present invention. The indoor unit 10B is a ceiling-embedded cassette type single-flow indoor unit. The indoor unit 10B is embedded in a ceiling in a manner similar to the indoor unit 10A according to the first embodiment. A housing 11 is provided with one inlet port 17 and one blow-out port 18.

For example, a refrigerant detection sensor 30 is disposed at a place S5 or a place S6. The place S5 is disposed adjacent to the blow-out port 18 at a position displaced from the blow-out port 18 in the longitudinal direction of the blow-out port 18. The place S6 is located between the blow-out port 18 and the inlet port 17. Each of the places S5 and S6 is located at an opening 16 on the housing 11 other than the blow-out port 18 and the inlet port 17.

### (2) Characteristics

### (2-1)

Regarding the place S5, an outside-air-flow-area part 36 of the refrigerant detection sensor 30 is located adjacent to the blow-out port 18 at the position displaced from the blow-out port 18 in the longitudinal direction of the blow-out port 18. Thus, the refrigerant detection sensor 30 is disposed off wind blown out through the blow-out port 18. Therefore, the wind is less likely to hit the refrigerant detection sensor 30.

### (2-2)

Regarding the place S6, the outside-air-flow-area part 36 of the refrigerant detection sensor 30 is disposed between the blow-out port 18 and the inlet port 17. Thus, the refrigerant detection sensor 30 is disposed off a route of wind blown out through the blow-out port 18 and a route of wind drawn in through the inlet port 17. Therefore, the wind is less likely to hit the refrigerant detection sensor 30.

### (2-3)

Regarding each of the places S5 and S6, the outside-air-flow-area part 36 of the refrigerant detection sensor 30 is disposed at the opening 16 on the housing 11 other than the blow-out port 18 and the inlet port 17. Thus, the refrigerant detection sensor 30 can be disposed off the blow-out port 18 or the inlet port 17. Therefore, the wind is less likely to hit the refrigerant detection sensor 30.

### <Third Embodiment>

### (1) Configuration

FIG. 6 illustrates an indoor unit 10C according to a third embodiment of the present invention. The indoor unit 10C is a ceiling-embedded cassette type double-flow indoor unit. The indoor unit 10C is embedded in a ceiling in a manner similar to the indoor unit 10A according to the first embodiment. A housing 11 is provided with two inlet ports 17 and two blow-out ports 18.

For example, a refrigerant detection sensor 30 is disposed at a place S7, a place S8, or a place S9. The place S7 is located between the blow-out port 18 and the inlet port 17. The place S8 is located between the two adjacent inlet ports 17. The place S9 is located adjacent to the blow-out port 18 at a position displaced from the blow-out port 18 in the longitudinal direction of the blow-out port 18. Each of the places S7 to S9 is located at an opening 16 on the housing 11 other than the blow-out port 18 and the inlet port 17.

### (2) Characteristics

### (2-1)

Regarding the place S8, an outside-air-flow-area part 36 of the refrigerant detection sensor 30 is disposed between the plurality of inlet ports 17. Thus, the refrigerant detection sensor 30 is disposed off a route of wind drawn in through each of the inlet ports 17. Therefore, the wind is less likely to hit the refrigerant detection sensor 30.

### (2-2)

Regarding the place S7 and the place S9, effects similar to the effects described in the second embodiment are achieved.

### <Fourth Embodiment>

### (1) Configuration

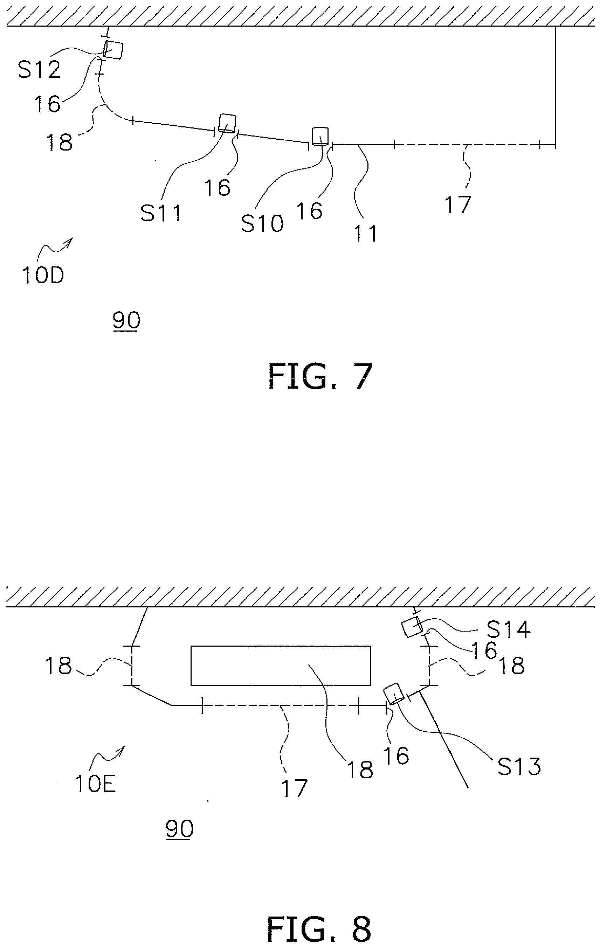

FIG. 7 illustrates an indoor unit 10D according to a fourth embodiment of the present invention. The indoor unit 10D is a ceiling-suspended type one-direction blow-out indoor unit. The indoor unit 10D is installed in contact with a ceiling C.

For example, a refrigerant detection sensor 30 is disposed at a place S10, a place S11, or a place S12. Each of the places S10 and S11 is located between a blow-out port 18 and an inlet port 17. The place S12 is located on the opposite side of the inlet port 17 with respect to the blow-out port 18. Each of the places S10 to S12 is located at an opening 16 on a housing 11 other than the blow-out port 18 and the inlet port 17.

### (2) Characteristics

### (2-1)

Regarding the place S12, an outside-air-flow-area part 36 of the refrigerant detection sensor 30 is disposed on the opposite side of the inlet port 17 with respect to the blow-out port 18. Thus, the refrigerant detection sensor 30 is disposed off a route of wind blown out through the blow-out port 18 and a route of wind drawn in through the inlet port 17. Therefore, the wind is less likely to hit the refrigerant detection sensor 30.

### (2-2)

Regarding the place S10 and the place S11, effects similar to the effects described in the second embodiment are achieved.

### <Fifth Embodiment>

### (1) Configuration

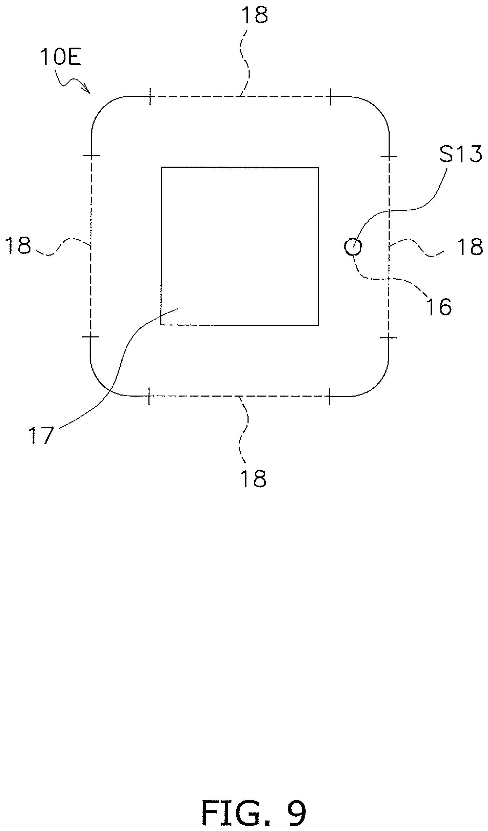

FIGS. 8 and 9 illustrate an indoor unit 10E according to a fifth embodiment of the present invention. The indoor unit 10D is a ceiling-suspended type four-direction blow-out indoor unit. The indoor unit 10E is installed in contact with a ceiling C in a manner similar to the indoor unit 10D according to the fourth embodiment. A housing 11 is provided with one inlet port 17 and four blow-out ports 18.

For example, a refrigerant detection sensor 30 is disposed at a place S13 or a place S14. The place S13 is located between the blow-out port 18 and the inlet port 17. The place S14 is located on the opposite side of the inlet port 17 with respect to the blow-out port 18. Each of the places S13 and S14 is located at an opening 16 on the housing 11 other than the blow-out port 18 and the inlet port 17.

### (2) Characteristics

Regarding the place S13 and the place S14, effects similar to the effects described in the fourth embodiment are achieved.

### <Sixth Embodiment>

### (1) Configuration

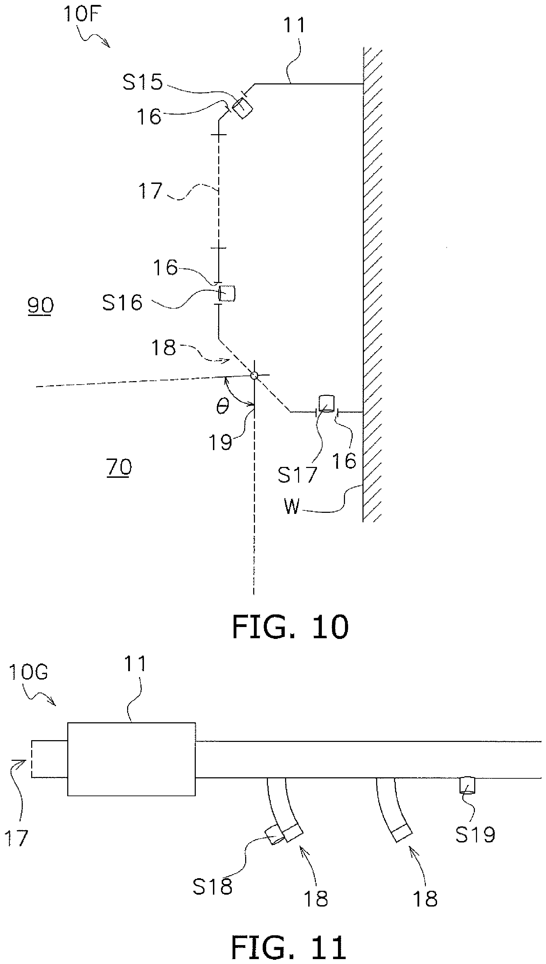

FIG. 10 illustrates an indoor unit 10F according to a sixth embodiment of the present invention. The indoor unit 10F is a wall-mounted type indoor unit. The indoor unit 10F is installed in contact with a wall W. A housing 11 is provided with a flap 19. The flap 19 is disposed on a blow-out port 18, and swings in the range of a central angle θ to change the blow-out direction of air. An air flow area 70 is inside the central angle θ which defines the swing range of the flap 19.

For example, a refrigerant detection sensor 30 is disposed at a place S15, a place S16, or a place S17. The place S15, the place S16, and the place S17 are all located outside the central angle θ. The place S15 is located on the opposite side of the blow-out port 18 with respect to an inlet port 17. The place S18 is located between the blow-out port 18 and the inlet port 17. The place S17 is located on the opposite side of the inlet port 17 with respect to the blow-out port 18. Each of the places S15 to S17 is located at an opening 16 on the housing 11 other than the blow-out port 18 and the inlet port 17.

### (2) Characteristics

### (2-1)

Regarding the place S15, an outside-air-flow-area part 36 of the refrigerant detection sensor 30 is disposed on the opposite side of the blow-out port 18 with respect to the inlet port 17. Thus, the refrigerant detection sensor 30 is disposed off a route of wind blown out through the blow-out port 18 and a route of wind drawn in through the inlet port 17. Therefore, the wind is less likely to hit the refrigerant detection sensor 30.

### (2-2)

Regarding the place S16 and the place S17, effects similar to the effects described in the fourth embodiment are achieved.

### <Seventh Embodiment>

### (1) Configuration

FIG. 11 illustrates an indoor unit 10G according to a seventh embodiment of the present invention. The indoor unit 10G is a duct type indoor unit. The indoor unit 10G includes a blow-out port 18 which is disposed on the tip of a duct.

For example, a refrigerant detection sensor 30 is disposed at a place S18 or a place S19. The place S18 is located on the side face of the duct including the blow-out port 18. The place S19 is located on the duct which is disposed on a ceiling.

### (2) Characteristics

### (2-1)

Regarding the place S18, an outside-air-flow-area part 36 of the refrigerant detection sensor 30 is disposed on the side face of the duct including the blow-out port 18. Thus, the refrigerant detection sensor 30 can be disposed off the blow-out port 18 or an inlet port 17. Therefore, the wind is less likely to hit the refrigerant detection sensor 30.

### (2-2)

Regarding the place S19, the outside-air-flow-area part 36 of the refrigerant detection sensor 30 is disposed on the duct which is disposed on the ceiling. Thus, the refrigerant detection sensor 30 can be disposed off the blow-out port 18 or the inlet port 17. Therefore, the wind is less likely to hit the refrigerant detection sensor 30.

### REFERENCE SIGNS LIST

- 10: indoor unit
- 11: housing
- 15: decorative panel
- 17: inlet port
- 18: blow-out port
- 30: refrigerant detection sensor
- 35: inside-air-flow-area part
- 36: outside-air-flow-area part
- 40: sensor unit
- 70: air flow area
- 90: space to be air-conditioned
- C: ceiling
- W: wall

### CITATION LIST

### PATENT LITERATURE

Patent Literature 1: JP H08-178397 A

## Claims

1. An indoor unit (10) comprising:
a blow-out port (18) through which air is blown out into a space (90) to be air-conditioned;
a refrigerant flow path member (40) through which flammable refrigerant gas flows; and
a refrigerant detection sensor (30) configured to detect the refrigerant gas leaking out of the refrigerant flow path member, wherein
the refrigerant detection sensor is disposed so as to face the space to be air-conditioned,
the refrigerant detection sensor includes a casing (31),
the casing includes a gas intake port (32) for taking in the refrigerant gas,
the refrigerant detection sensor includes an outside-air-flow-area part (36) disposed outside an air flow area (70) through which the air blown out through the blow-out port passes, and
the outside-air-flow-area part includes the gas intake port.

2. The indoor unit according to claim 1, wherein
the refrigerant detection sensor further includes
a sensor element (42) configured to detect the refrigerant gas, and
a filter (45) through which the refrigerant gas passes before arriving at the sensor element, and
the outside-air-flow-area part includes the filter.

3. The indoor unit according to claim 2, wherein the outside-air-flow-area part includes the sensor element.

4. The indoor unit according to any one of claims 1 to 3, further comprising a flap (19) disposed on the blow-out port and configured to swing to change a blow-out direction of the air, wherein
the air flow area is inside a central angle (θ) defining a swing range of the flap.

5. The indoor unit according to any one of claims 1 to 4, wherein the outside-air-flow-area part is disposed adjacent to the blow-out port at a position displaced from the blow-out port in a longitudinal direction of the blow-out port.

6. The indoor unit according to any one of claims 1 to 5, wherein the outside-air-flow-area part is disposed between a plurality of the blow-out ports.

7. The indoor unit according to any one of claims 1 to 6, further comprising an inlet port (17) through which the air is drawn in from the space to be air-conditioned, wherein
the air drawn in through the inlet port passes through the air flow area.

8. The indoor unit according to claim 7, wherein the gas intake port is disposed at a position lower than a lowest one of the inlet port and the blow-out port.

9. The indoor unit according to claim 7 or 8, wherein the outside-air-flow-area part is disposed between the blow-out port and the inlet port.

10. The indoor unit according to any one of claims 7 to 9, wherein the outside-air-flow-area part is disposed on an opposite side of the inlet port with respect to the blow-out port.

11. The indoor unit according to any one of claims 7 to 10, wherein the outside-air-flow-area part is disposed on an opposite side of the blow-out port with respect to the inlet port.

12. The indoor unit according to any one of claims 7 to 11, wherein the outside-air-flow-area part is disposed between a plurality of the inlet ports.

13. The indoor unit according to any one of claims 7 to 12, further comprising a housing (11) configured to house the refrigerant flow path member, wherein
the outside-air-flow-area part is disposed at an opening (16) on the housing other than the blow-out port and the inlet port.

14. The indoor unit according to any one of claims 7 to 12, further comprising a decorative panel (15) disposed so as to face the space to be air-conditioned, wherein
the outside-air-flow-area part is disposed at an opening (16) on the decorative panel other than the blow-out port and the inlet port.
